# EUROPÄISCHE PATENTSCHRIFT

(11) **EP 1 137 610 B1**
(45) Veröffentlichungstag und Bekanntmachung des Hinweises auf die Patenterteilung: **10.03.2004**
(21) Anmeldenummer: 99960980.3
(22) Anmeldetag: 16.11.1999
(51) Int. Cl.: C04B 28/18

(54) **VERFAHREN ZUR HERSTELLUNG VON MINERALISCHEN FORMKÖRPERN**
METHOD FOR PRODUCING MINERAL SHAPED BODIES
PROCEDE POUR PRODUIRE DES CORPS MOULES MINERAUX

(30) Priorität: 27.11.1998 DE 19854768
(43) Veröffentlichungstag der Anmeldung: 04.10.2001
(73) Patentinhaber: Wolff Walsrode AG, 29655 Walsrode (DE)
(72) Erfinder: BAYER, Roland, D-29683 Fallingbostel (DE); BURTSCHER, Wolfgang, D-86650 Wemding (DE)
(74) Vertreter: Pettrich, Klaus-Günter, Dr.
(86) Internationale Anmeldenummer: PCT/EP1999/008794
(87) Internationale Veröffentlichungsnummer: WO 2000/032535

(56) Entgegenhaltungen:
- DE-A- 19 523 324
- US-A- 4 128 434
- DATABASE WPI Section Ch, Week 198306 Derwent Publications Ltd., London, GB; Class A11, AN 1983-13224K XP002133925 & JP 57 209867 A (SHOWA DENKO KK), 23. Dezember 1982 (1982-12-23)
- DATABASE WPI Section Ch, Week 198221 Derwent Publications Ltd., London, GB; Class A93, AN 1982-42116E XP002133926 & JP 57 061652 A (MATSUSHITA ELECTRIC WORKS LTD), 14. April 1982 (1982-04-14)

## Beschreibung

Die vorliegende Erfindung betrifft ein neues Verfahren zur Herstellung von mineralischen, phasengebundenen Formkörpern aus Calciumsilikathydrat (CSH-phasengebundenen Forkörpern). Die Anwendung dieses Verfahrens ermöglicht es, eine größere Formenvielfalt von CSH-phasengebundenen Formkörpern herzustellen, als bislang durch herkömmliches Pressen zugänglich ist. Außerdem sind nach dem neuen Verfahren Rohlinge formbar, deren Größe nur noch durch die Größe des Härtekessels begrenzt wird. Die so hergestellten Formkörper weisen eine hohe Festigkeit sowie eine hohe Oberflächenhärte auf.

Bislang werden CSH-phasengebundenen Formkörper für den Einsatz im Baubereich durch Mischen und Verpressen von erdfeuchtem Sand mit Branntkalk oder Kalkhydrat und eventuell weiteren Komponenten, Vorreagieren bei Löschtemperatur, Pressen zu Rohlingen und anschließendem Härten im Wasserdampf bei Temperaturen von 180 bis 240°C und Drücken von 8 bis 25 bar hergestellt.

Der Teilschritt der Formgebung der Rohlinge aus o.g. Mischungen erfolgte bislang in diskontinuierlichen hydraulischen Pressen bei ca. 6 bis 20 N/mm². Diese hohen Drücke sind notwendig, um den Zusammenhalt zwischen den Körnern der Rohlinge zu gewährleisten, da die Rohlinge sonst beim Transport von der Presse auf die Gestelle für den Härtekessel zerbrechen. Trotz des hohen Preßdrucks gibt es jedoch immer wieder Steine, die beim Transport in den Ofen zerbrechen oder Rißbildung durch zu geringen Zusammenhalt zeigen.

Da aus Kostengründen die Tendenz an den Baustellen zur Verwendung von immer größeren Kalksandsteinen geht, werden zu deren Herstellung auch immer größere Pressen und Preßformen sowie höhere Preßdrucke notwendig.

Bei großformatigen Steinen und großen Preßdrücken werden die Formen außerordentlich hohen Druckbelastungen ausgesetzt, was dazu führt, daß solche Formen sehr teuer sind. Es war deshalb Aufgabe der vorliegenden Erfindung, ein Verfahren zu finden, mit dem sich CSH-phasengebundene Formkörper in größeren Abmessungen und größerer Formenvielfalt und mit größerer Wirtschaftlichkeit als bisher herstellen lassen.

Erfindungsgemäß wurde die Aufgabe durch ein Verfahren gelöst, bei dem ein Rohstoffgemisch aus einer mineralischen Komponente und mindestens eine calciumhaltige Substanz, die zu Calciumsilikathydrat-Phasen reagieren kann, einem oder mehreren Plastifizierungsmitteln, Wasser und gegebenenfalls Füllstoffen bis zur Plastifizierung gemischt, eventuell anschließend gewalzt oder geknetet, in einen Schneckenextruder verdichtet und durch ein Mundstück stranggepreßt/extrudiert wird und der entstandene Rohling anschließend durch Hydrothermalreaktion in einer Wasserdampfatmosphäre bei erhöhter Temperatur und unter erhöhtem Druck zu einem CSH-phasengebundenen Formkörper gehärtet wird.

Die Extrusion von Calciumsilikathydrat-Rohlingen in ungehärtetem Zustand ist bislang unbekannt. Bekannt ist lediglich die Extrusion von bereits im Autoklaven vollständig gehärteten Calciumsilikathydrat-Aufschlämmungen (DE-PS 17 96 293). Hierbei wird eine wäßrige Suspension von CaO und SiO₂ im Massenverhältnis 0,5:1 bis 1:1, meist mit Asbestfasern oder Tonen, im Autoklaven der bekannten Reaktion zur Bildung von Tobermorit- oder Xonotlitkristallen unterworfen. Dabei beträgt das Gewichtsverhältnis von trockenen Komponenten und Wasser etwa 1:10. Die erhaltene Aufschlämmung von Calciumsilikathydrat wird anschließend extrudiert. Bei der näheren Betrachtung zeigt sich, daß bei diesem Verfahren ein sehr hoher Anteil von CaO notwendig ist, der die Stoffkosten erheblich erhöht. Eventuell eingesetzte Tone senken, wie allgemein bekannt ist, die Festigkeit. Der Einsatz von Asbestfasem verhilft der Masse zwar zur Extrudierfähigkeit, ist aus gesundheitlichen Gründen aber nicht mehr zu empfehlen und in vielen Ländern bereits verboten. Schließlich wird der hohe Wasserbedarf zu hohen anschließenden Trocknungs-/Entwässerungskosten führen. Im japanischen Patent J 61-53 141 wird ebenfalls die Extrusion von bereits gehärteten Xonotlit-Kristallen beschrieben, die zuvor in wäßriger Aufschlämmung hergestellt werden. Um den hohen Anteil Wasser aus dem anschließend durch Extrusion geformten Material abzutrennen, war eine längere Trocknung von über 12 h bei 150 bis 160°C notwendig.

Man führt das erfindungsgemäße Verfahren folgendermaßen durch:

Zunächst werden die Rohstoffe in beliebiger Reihenfolge gemischt. Im allgemeinen werden alle Trockenkomponenten zunächst trocken vorgemischt, dann mit der errechneten Menge Wasser versetzt und erneut bis zur Plastifizierung gemischt. Es ist jedoch auch möglich, die Trockenstoffe mit einer wäßrigen Lösung des Plastifiziermittels zu versetzen oder sämtliche Komponenten und das Wasser gleichzeitig zu mischen. Es ist ebenfalls möglich, einen Teil oder alle Komponenten erdfeucht zusammenzumischen.

Als mineralische Komponente wird vorzugsweise SiO₂-haltige Material verwendet. Insbesondere können gemahlene und ungemahle SiO₂-haltige Kiese, Splitte, Sande, Aschen und Mehle und Mischungen aus einem oder mehreren dieser Materialien, ganz besonders bevorzugt Quarzsande und Quarzmehle eingesetzt werden. Grundsätzlich lassen sich Sande unterschiedlichster Korngrößen extrudieren, es ist bei der Zusammenstellung der Sande jedoch auf eine Korngrößenverteilung zu achten, die die Entstehung eines möglichst kompakten Materials ermöglicht. Als calciumhaltige Substanzen, die zu CSH-Phasen reagieren können, werden bevorzugt Kalkhydrat (Ca(OH)₂), Branntkalk (CaO) sowie Mischungen daraus eingesetzt. Zusätzlich können als Füllstoffe Fasern und/oder Späne auf Basis Cellulose oder auf synthetischer Polymerbasis sowie Kohlefasern eingesetzt werden.

Als Plastifiziermittel werden vorzugsweise Polyethylenoxid sowie Celluloseether insbesondere mit einem oder mehreren Methyl-, Ethyl-, Hydroxyethyl-, Hydroxypropyl- und/oder Sulfoethylsubstituenten verwendet. Die plastifizierte Masse wird anschließend in einem Schneckenextruder verdichtet und durch ein Mundstück ausgepreßt. Die so erhaltenen Rohlinge werden wie üblich unter Druck und hoher Temperatur, vorzugsweise bei 8 bis 25 bar und 180 bis 240°C in Wasserdampf gehärtet.

### Beispiel

| | |
|---|---|
| 36,2 | Teile Quarzsand F 34 |
| 8,7 | Teile Weißkalkhydrat |
| 63,8 | Teile Quarzmehl mit Oberfläche 1506 cm²/g |
| 1,09 | Teile Plastifiziermittel Walocel VP-M-14140 |

werden zunächst trocken vorgemischt, dann mit 843,4 Teilen Wasser 10 min zu einer homogenen Paste gemischt. Das plastifizierte Mischgut wird in den Einfülltrichter des Extruders gefüllt, der Extruderschnecke zugeführt, in der Vakuumkammer evakuiert, komprimiert und durch das Mundstück gepreßt. Der Preßdruck am Düsenmund beträgt 3 bar. Die Probe wird ausgetragen und mehrere Stunden bei ca. 180 bis 240°C und 8 bis 25 bar Wasserdampfdruck gehärtet.

## Patentansprüche

1. Verfahren zur Herstellung von Calciumsilikathydrat-(CSH-)phasengebundenen Formkörpern, bei dem eine Rohstoffmischung aus einer mineralischen Komponente und mindestens einer caiciumhaltigen Substanz, die zu Calciumsilikathydrat-Phasen reagieren kann, mindestens einem Plastifizierungsmittel und Wasser bis zur Plastifizierung gemischt, in einem Schneckenextruder verdichtet, durch ein Mundstück ausgepreßt und der so entstandene Rohling bei einem Druck von 8 bis 25 bar und einer Temperatur von 180 bis 240°C in einer Wasserdampfatmosphäre durch Hydrothermalreaktion zu einem CSH-phasengebundenen Formkörper gehärtet wird, wobei als Plastifizierungsmittel ein Polyethylenoxid oder ein Cellulöseether eingesetzt wird, der einen oder mehrere Substituenten aus der Gruppe Methyl, Ethyl, Hydroxyethyl, Hydroxypropyl und Sulfoethyl trägt.

2. Verfahren nach Anspruch 1, **dadurch, gekennzeichnet, daß** als mineralische Komponente ein SiO₂-haltiges Material eingesetzt wird.

3. Verfahren nach einem der Ansprüche 1 bis 2, **dadurch gekennzeichnet, daß** gemahlener oder ungemahlener SiO₂-haltiger Kies, Splitt, Sand, Asche oder Mehl oder Gemische aus mehreren dieser Materialien eingesetzt werden.

4. Verfahren nach Anspruch 1 bis 3, **dadurch gekennzeichnet, daß** nach dem Vermischen der Rohstoffe und vor der Verdichtung im Schneckenextruder das Rohstöffgemisch zusätzlich gewalzt oder geknetet wird.

5. Verfahren nach einem der Ansprüche 1 bis 4, **dadurch gekennzeichnet, daß** die Rohstoffmischung zusätzlich Fasern enthält.

6. Verfahren nach einem der Ansprüche 1 bis 5, **dadurch gekennzeichnet, daß** die Rohstoffmischung Fasern und/oder Späne auf Basis Cellulose oder auf synthetischer Polymerbasis oder Kohlefasern enthält.

7. Verfahren nach einem der Ansprüche 1 bis 6, **dadurch gekennzeichnet, daß** als SiO₂-haltiges Material Quarzsand, Quarzmehl oder ein Gemisch aus beiden Materialien eingesetzt wird.

8. Verfahren nach einem der Ansprüche 1 bis 7, **dadurch gekennzeichnet, daß** als calciumhaltige Substanz Kalkhydrat (Ca(OH)₂) oder Branntkalk (CaO) oder deren Gemisch eingesetzt wird.

9. Verfahren nach einem der Ansprüche 1 bis 8, **dadurch gekennzeichnet, daß** zur Herstellung des Rohstoffgemisches zunächst alle Komponenten mit Ausnahme des Wassers trocken oder erdfeucht vorgemischt, die Vormischung anschließend mit Wasser versetzt und bis zur Plastifizierung gemischt wird.

10. CSH-phasengebundener Formkörper erhältlich nach einem Verfahren gemäß einem der Ansprüche 1 bis 9.

11. Verwendung eines mittels eines Verfahrens gemäß einem der Ansprüche 1 bis 9 hergestellten CSH-phasengebundenen Formkörpers als Baumaterial.

## Claims

1. Process for the production of calcium silicate hydrate (CSH)-phase-bound moulded bodies, in which a raw material mixture comprising a mineral component and at least one substance containing calcium, which may react to produce calcium silicate hydrate phases, at least one plasticizing agent and water is mixed as far as plasticization, compressed in a screw-type extruder, extruded through a die and the blank thus produced is hardened to a CSH-phase-bound moulded body by hydrothermal reaction in a steam atmosphere, at a pressure of 8 to 25 bars and a temperature of 180 to 240 °C, wherein a polyethylene oxide or a cellulose ether, which carries one or more substituents from the group methyl, ethyl, hydroxyethyl, hydroxypropyl and sulfoethyl, is used as plasticizing agent.

2. Process according to claim 1, **characterized in that** a material containing SiO₂ is used as mineral component.

3. Process according to claim 1 or 2, **characterized in that** ground or unground SiO₂-containing gravel, grit, sand, ash or powder or mixtures comprising a plurality of these materials is used.

4. Process according to one of claims 1 to 3, **characterized in that** the raw material mixture is additionally rolled or kneaded after the raw materials have been mixed and before compacting in the screw-type extruder.

5. Process according to one of claims 1 to 4, **characterized in that** the raw material mixture additionally contains fibres.

6. Process according to one of claims 1 to 5, **characterized in that** the raw material mixture contains fibres and/or chips based on cellulose or based on synthetic polymer or carbon fibres.

7. Process according to one of claims 1 to 6, **characterized in that** quartz sand, quartz powder or a mixture of both of these materials is used as material containing SiO₂.

8. Process according to one of claims 1 to 7, **characterized in that** hydrated lime (Ca(OH)₂) or quicklime (CaO) or a mixture thereof is used as substance containing calcium.

9. Process according to one of claims 1 to 8, **characterized in that** in order to produce the raw material mixture, all components with the exception of the water are initially pre-mixed dry or earth-moist, the pre-mix is then mixed with water and mixing takes place until plasticization.

10. CSH-phase-bound moulded body obtainable by a process according to one of claims 1 to 9.

11. Use of a CSH-phase-bound moulded body produced by means of a process according to one of claims 1 to 9 as building material.

## Revendications

1. Procédé de préparation de corps moulés à phase liée de silicate hydraté de calcium (CSH), dans lequel un mélange de matières premières composé d'un composant minéral et d'au moins une substance calcaire qui peut réagir en phases de silicate hydraté de calcium, est mélangé avec au moins un agent plastifiant et de l'eau jusqu'à la plastification, compressé dans une extrudeuse à vis sans fin, éjecté par un embout et l'ébauche ainsi formée est durcie à une pression de 8 à 25 bars et une température de 180 à 240°C dans une atmosphère de vapeur d'eau par réaction hydrothermique en un corps moulé à phase liée CSH, un oxyde de polyéthylène ou un éther de cellulose qui porte un ou plusieurs substituants du groupe méthyle, éthyle, hydroxyéthyle, hydroxypropyle et sulfoéthyle étant utilisés comme agent plastifiant.

2. Procédé selon la revendication 1, **caractérisé en ce qu'**un matériau contenant du SiO₂ est utilisé comme composant minéral.

3. Procédé selon l'une des revendications 1 à 2, **caractérisé en ce que** des graviers, gravillons, sable, cendres ou farines contenant du SiO₂ ou des mélanges de plusieurs de ces matériaux sont utilisés.

4. Procédé selon l'une des revendications 1 à 3, **caractérisé en ce qu'**après le mélange des matières premières et avant le compactage dans l'extrudeuse à vis sans fin, le mélange de matières premières est en plus laminé ou malaxé.

5. Procédé selon l'une des revendications 1 à 4, **caractérisé en ce que** le mélange de matières premières contient en outre des fibres.

6. Procédé selon l'une des revendications 1 à 5, **caractérisé en ce que** le mélange de matières premières contient des fibres et/ou des copeaux à base de cellulose ou à base de polymère synthétique ou de fibres de carbone.

7. Procédé selon l'une des revendications 1 à 6, **caractérisé en ce que** le sable de quartz, la farine de quartz ou un mélange des deux matériaux est utilisé comme matériau contenant du SiO₂.

8. Procédé selon l'une des revendications 1 à 7, **caractérisé en ce que** la chaux éteinte (Ca(OH)₂) ou la chaux vive (CaO) ou leurs mélanges sont utilisés.

9. Procédé selon l'une des revendications 1 à 8, **caractérisé en ce que** tous les composants à l'exception de l'eau sont d'abord prémélangés secs ou avec la consistance de la terre humide pour la préparation du mélange de matières premières, le prémélange est ensuite mélangé à l'eau et agité jusqu'à la plastification.

10. Corps moulé à phase liée CSH obtenu selon un procédé conformément à l'une des revendications 1 à 9.

11. Mise en oeuvre d'un corps moulé à phase liée CSH préparé selon l'une des revendications 1 à 9.
